# FASCICULE DE BREVET EUROPEEN

(11) **EP 0 383 649 B1**
(45) Date de publication et mention de la délivrance du brevet: **08.06.1994**
(21) Numéro de dépôt: 90400314.2
(22) Date de dépôt: 05.02.1990
(51) Int. Cl.: B06B 1/06, G10K 11/04, G08B 23/00

(54) **Appareil de détection et de signalisation des chutes des corps dans l'eau**
Gerät zum Feststellen und Signalisieren von ins Wasser fallenden Körpern
Apparatus for detecting and signalling articles dropping into the water

(30) Priorité: 14.02.1989 FR 8901859
(43) Date de publication de la demande: 22.08.1990
(73) Titulaire: SYCLOPE ELECTRONIQUE s.a.r.l., F-64170 Artix (FR)
(72) Inventeur: Mourgues Eric, F-64370 Arthez de Béarn (FR)
(74) Mandataire: Epstein, Henri

(56) Documents cités:
- DE-A- 3 006 654
- FR-A- 2 282 627
- US-A- 2 942 247
- US-A- 4 533 907
- US-A- 4 704 894

## Description

La présente invention se rapporte à un appareil de détection et de signalisation de l'immersion ou de la chute des corps dans l'eau, notamment pour les piscines.

Les piscines non surveillées présentent un danger tout particulièrement pour les enfants accédant librement aux abords des piscines.

Chaque année on déplore un certain nombre de victimes de noyades accidentelles dans les piscines, surtout des piscines familiales, que leur noyade soit occasionnée par une chute inopinée de l'enfant ou par une immersion délibérée en absence d'adultes à proximité.

Le besoin s'est donc fait sentir de pouvoir assurer une surveillance de piscines par des moyens fiables en dehors des périodes de baignade autorisée au cours de laquelle les enfants sont censés d'être surveillés en présence des adultes.

L'appareil concerné comprend dans un boitier une membrane et une cellule piézoélectrique pour la détection d'ondes de fréquences inférieures ou égales à 5 Hz reliée à un circuit d'amplification et de gestion du signal. En effet, une chute dans l'eau donne lieu à des ondes sonores ou sub-sonores dont le spectre de fréquences est limité au domaine inférieur ou égal à 5 Hz.

Il est donc souhaitable, que le détecteur prenne en compte exclusivement la bande de fréquence mentionnée, afin d'exclure aussi complètement que possible toutes les fréquences pouvant être transmises au détecteur des sources autres que des personnes tombant à l'eau.

On connait des détecteurs de chute d'objet dans l'eau dans lesquels l'élimination des signaux électriques dûs aux fréquences perturbatrices et non représentatives des chutes dans l'eau s'effectue au moyen de circuits électroniques de filtrage, voir par exemple US-A- 2 942 247.

L'invention a pour l'objet un appareil du genre précité dans lequel le flitrage des fréquences s'effectue par un moyen extrêmement simple sans faire appel à des circuits électroniques dont la fiabilité s'altère au cours de l'usage.

L'appareil de détection et de signalisation de l'immersion des corps dans l'eau comprenant une cellule piézo-électrique pour la détection d'ondes de fréquences inférieures ou égale à 5 Hz et comportant dans un boitier un capteur composé d'une membrane et d'une cellule piézo-électrique relié à un circuit d'amplification et de gestion du signal, dans lequel on réalise l'élimination des effets produits par les fréquences perturbatrices non représentives des chutes des corps dans l'eau, est caractérisé en ce que l'élimination des effets produits par les fréquences perturbatrices s'effectue par amortissement ou atténuation des fréquences supérieures à 5 Hz en plaçant au centre entre la membrane (2) et l'élément piézo-électrique (4) une pastille (11) d'élastomère de dureté Shore entre 20 et 25 constituant un pont d'élastomère.

Ainsi, les vibrations dont est siège la membrane du détecteur sont transmises à la plaque de l'élément piézo-électrique par l'intermédiaire du pont élastomère qui, par sa nature et composition, transmet intégralement la bande de fréquences inférieures ou égales à 5 Hz et amortit ou atténue les fréquences perturbatrices. Le pont élastomère réalise donc une sélection de la gamme de fréquences choisie.

Le choix du pont en élastomère dépend des paramètres, qui sont, d'une part, fonction de la dureté de l'élastomère et, d'autre part tiennent compte de sa géométrie, c'est à dire de son épaisseur et du rapport des surfaces de celle du pont et de celle de la plaque de l'élément piézo-électrique. De préférence, ce rapport de surfaces est d'environ 0,2.

Avantageusement, le pont est réalisé par un disque d'environ 8 mm de diamètre et d'environ 0,5 mm d'épaisseur en élastomère de dureté Shore A d'environ 20.

Selon une autre caractéristique importante de l'invention, la membrane fait corps avec le boitier, tandis que les bords de la plaque de l'élément piézo-électrique sont insérés solidement dans le corps du boitier, de sorte que le boitier constituant un pont acoustique transmet à l'ensemble des parties du capteur des vibrations reçues de sources extérieures autres que l'eau, la membrane étant ainsi en équilibre statique ne transmettant aucune déformation à l'élément piézo-électrique.

En effet, lorsque la plaque et la membrane sont solidement maintenues dans le corps du boitier, les vibrations dues au milieu extérieur autre que l'eau sont transmises intégralement au moyen de ce pont acoustique que constitue le boitier, à l'ensemble des parties du capteur, de sorte que la membrane ne subit pas de déformation. La membrane est ainsi en équilibre statique n'enregistrant aucune déformation. Elle ne transmet dans ce cas aucune vibration à l'élément piézo-électrique avec lequel elle est au surplus liée mécaniquement par le pont élastomère.

Lorsque la cause des vibrations provient de l'eau, donc de la chute d'un corps, seule la membrane, à l'exclusion du boitier, reçoit des vibrations, le boitier ne jouant que le rôle d'un support physique.

Dans ce dernier cas, seules les déformations de la membrane sont transmises à l'élément piézo-électrique par l'intermédiaire du pont élastomère qui joue le rôle de filtre en sélectionnant la gamme de fréquences choisies.

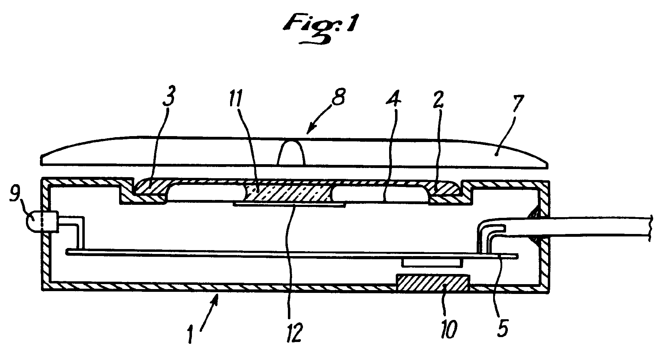

L'invention sera illustrée par des dessins annexes, dont
la figure 1 donne une représentation schématique de l' appareil selon l'invention, et

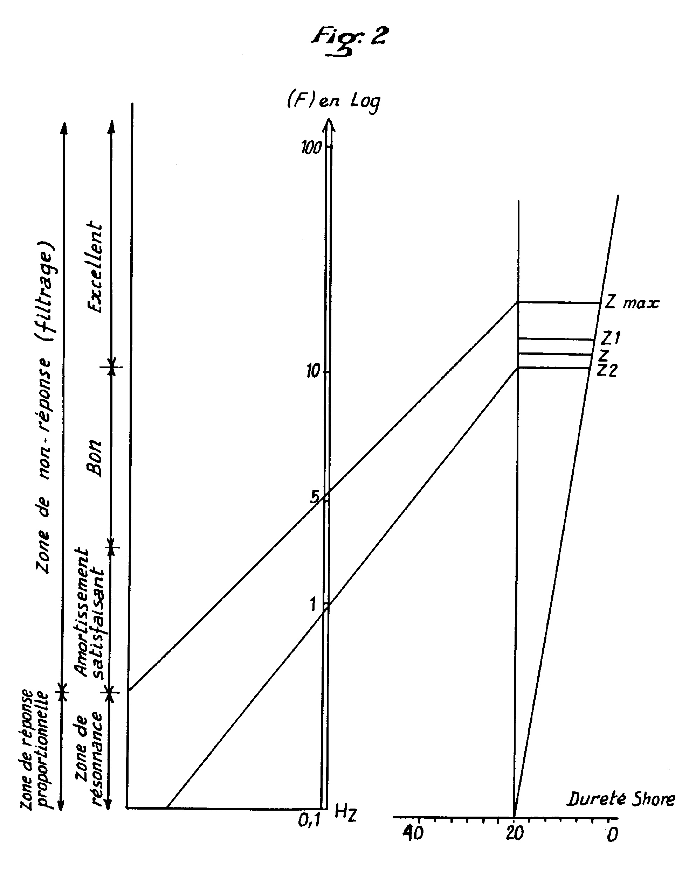

la figure 2 représente une abaque portant sur les éléments du choix du pont élastomère en fonction de ses paramètres.

Sur le dessus d'un boitier étanche 1 en matière plastique moulée est montée solidaire et de façon étanche une membrane déformable 2 également en maière plastique. Le boitier est recouvert par un capot de revêtement 7 dans l'ouverture centrale duquel sont placées en croisillon des ailettes 8.

Ledit boitier présente un rebord circulaire 3 dans lequel est inséré avec un faible espacement par rapport à la membrane 2 un cristal ou une plaque piézo-électrique en forme de disque 4, dont le bord circulaire est encastré de façon à faire corps avec le boitier. Du côté opposé de la plaque piézo-électrique est placé un élément de captage 12, l'ensemble piézo-électrique est relié par des fils non représentés à une carte de circuit imprimé 5, auquel conduisent des conducteurs d'alimentation électrique et de transmission des signaux 6.

Un voyant 9 relié à la carte 5 et servant de lampe témoin émerge du boitier pour permettre de constater que le détecteur a fonctionné.

Un bouchon de réglage 10 permet la régulation du seuil de déclenchement d'alarme.

Les signaux élaborés par la cellule sont transférés vers une centrale de traitement de signaux non représentée déclenchant l'alarme.

La centrale de traitement est alimentée par le réseau électrique et, à titre de précaution, par une batterie tampon.

La mise en marche de l'installation s'effectue au sein de la centrale et notamment sa mise en marche et son arrêt, éventuellement en séquence programmée.

Par ailleurs, la centrale est munie, outre de témoin de veille, de moyens pour actionner et arrêter une sirène d'alarme et pour contrôler le bon fonctionnement de la centrale.

Entre la membrane 2 et le disque piézo-électrique 4 est placée au centre une pastille calée entre les deux en élastomère silicone non corrosif autoadhérent. Sa dureté Shore A est de 20 à 25.

La variation de la bande passante étant fonction de plusieurs paramètres, la fonction de transfert peut être calculée suivant une zone de travail définie. La zone idéale en rapport avec la bande de fréquences de filtrage doit correspondre à la zone de résonance de l'amortissement.

Suivant la surface de contact de l'élastomère sur le disque piézo-électrique et sur la membrane, la réponse du filtre est différente.

Un rapport des surfaces de contact K donnant généralement satisfaction s'établit aux environs de 0,2. Les cellules piézo-électrique du commerce ayant généralement un diamètre d'environ 40 mm, le diamètre de la pastille élastomère sera donc de 8 mm.

Le fonctionnement du filtre dépend également de l'épaisseur de l'élastomère. Il a été choisi en raison de contraintes d'adopter une épaisseur de 0,5 mm, la tolérance pouvant atteindre ± 10%.

Sur le diagramme, on a représenté sur une échelle des duretés Shore une ordonnée correspondant à la dureté égale à 20. La zone de rapport de surfaces K est représentée par un cône dont le rapport idéal est le segment Z. Les segments Z1 et Z2 représentent respectivement les rapports 0,2 ± 10%, tandis que le segment Zmax représente la valeur maximale du rapport pour une bande passante de fréquences inférieure ou égale à 5Hz.

Sur un axe d'ordonnées à gauche du diagramme se rapportant à K, on a représenté des fréquences F en log Hz.

Sur un autre axe d'ordonnées, on a représenté graphiquement la valeur de l'amortissement gradué, de bas en haut, en zone de réponse proportionnelle comprenant la zone de résonance et la zone de non réponse (filtrage) comprenant l'amortissement "satisfaisant", "bon" et "excellent".

Cet abaque se lit de la façon suivante.

Sur l'échelle de la dureté Shore, on prend la valeur théorique de 20.

Cette dureté correspond à la plage de filtrage des fréquences désirées, étant donné le rapport des surfaces (ou des diamètres) établi (K = 0,2). Z1 représentant la tolérance K + 20%, le filtrage a été déterminé pour que Z1 représente la tolérance maximum du filtre en fréquence. Donc, toutes variations de signal dont la fréquence est inférieure à 5 Hz donneront sur le tableau de gauche (zone de réponse de l'élastomère) une zone de résonance, c'est à dire de transmission intégrale du signal.

On voit également à l'aide du graphique, que si la dureté Shore augmente, tout en ayant le rapport des surfaces constant, l 'ensemble du cône se déplace sur l'échelle vers le chiffre Shore 40.

Les segments Z, Z1 et Z2 restent parallèles à l'axe des abscisses. Si l'on désire que le filtre se maintienne dans la zone de résonance, c'est la fréquence qui sera modifiée et, dans ce cas, augmentée.Inversement, si la dureté Shore diminue, la fréquence du filtrage diminue également. La mise en oeuvre du pont élastomère à partir de l'élastomère en silicone livré en tube étanche s'effectue en déposant une noix du produit calibré sur le disque piézo-électrique et de la colle ABS sur la membrane. On crée le filtre par écrasement de la noix de silicone entre les deux éléments pour lui donner une épaisseur de 0,5 mm environ.

L'invention n'est pas limitée au mode de réalisation décrit, elle est susceptible de nombreuses variantes à la portée l'homme de l'art et en fonction de la valeur choisie de la bande passante.

## Revendications

1. Appareil de détection et de signalisation de l'immersion des corps dans l'eau, comprenant une cellule piézo-électrique pour la détection d'ondes de fréquences inférieures ou égales à 5 Hz et comportant dans un boitier (1) un capteur composé d'une membrane (2) et d'un élément piézo-électrique relié à un circuit d'amplification et de gestion du signal, dans lequel on réalise l'élimination des effets produits par les fréquences perturbatrices non représentatives des chutes des corps dans l'eau, caractérisé en ce que l'élimination des effets produits par les fréquences perturbatrices s'effectue par amortissement ou atténuation des fréquences supérieures à 5 Hz en plaçant au centre entre la membrane (2) et l'élément piézo-électrique (4) une pastille (11) d'élastomère de dureté Shore entre 20 et 25 constituant un pont d'élastomère.

2. Appareil selon la revendication 1, caractérisé en ce que l'épaisseur et la dureté de l'élastomère constituant le pont (11), ainsi que le rapport des surfaces de celle de la pastille (11) et celle de l'élément piézo-électrique (4) constituent des paramètres de choix du filtrage désiré.

3. Appareil selon la revendication 1 ou 2, caractérisé en ce que le rapport des surfaces de celle de la pastille (11) et celle de l'élément piézo-électrique (4) est d'environ 0,2.

4. Appareil selon la revendication 3, caractérisé en ce que le pont d'élastomère (11) est réalisé par une pastille d'environ 8 mm de diamètre et d'environ 0,5 mm d'épaisseur en élastomère de dureté Shore A d'environ 20.

5. Appareil selon l'une des revendications 1 à 4, caractérisé en ce que la membrane (2) fait corps avec le boitier (1), tandis que les bords de l'élément (4) piézo-électrique sont insérés solidement dans le boitier (1), de sorte que le boitier constituant un pont acoustique transmet à l'ensemble des parties du capteur des vibrations reçues de sources extérieures autres que l'eau, la membrance (2) étant ainsi en équilibre statique ne transmettant aucune déformation à l'élément piézo-électrique.

## Patentansprüche

1. Vorrichtung zur Erfassung und Signalisierung von in Wasser fallenden Körpern, eine piezoelektrische Zelle für die Erfassung von Frequenzwellen kleiner oder gleich 5 Hz umfassend und in einem Gehäuse (1) einen Aufnehmer aufweisend, der aus einer Membran (2) und einem piezoelektrischen Element zusammengesetzt ist, verbunden mit einer Signalverstärkungs- und Steuerungsschaltung, in welcher man die Eliminierung von Effekten realisiert, die durch die nicht repräsentativen, störenden Frequenzen des Fallens von Körpern in das Wasser erzeugt sind, dadurch gekennzeichnet, daß die Eliminierung der durch die störenden Frequenzen erzeugten Effekte durch Dämpfung oder Schwächung der Frequenzen größer 5 Hz erfolgt, in dem ein Plättchen (11) aus einem Elastomer von einer Shorehärte zwischen 20 und 25, das eine elastomere Brücke bildet, in der Mitte zwischen der Membran (2) und dem piezoelektrischen Element (4) angeordnet ist.

2. Vorrichtung nach Anspruch 1, dadurch gekennzeichnet, daß die Dicke und die Härte von dem die Brücke (11) bildenden Elastomer so wie das Verhältnis der Oberflächen von derjenigen des Plättchens (11) und derjenigen des piezoelektrischen Elements (4) Wahlparameter der gewünschten Filterung bilden.

3. Vorrichtung nach Anspruch 1 oder 2, dadurch gekennzeichnet, daß das Verhältnis der Oberflächen von derjenigen des Plättchens (11) und derjenigen des piezoelektrischen Elements (4) ungefähr 0,2 beträgt.

4. Vorrichtung nach Anspruch 3, dadurch gekennzeichnet, daß die elastomere Brücke durch ein Plättchen mit einem Durchmesser von ungefähr 8 mm und mit einer Dicke von etwa 0,5 mm in Elastomer der Shorehärte A von ungefähr 20 verwirklicht ist.

5. Vorrichtung nach einem der Ansprüche 1 bis 4, dadurch gekennzeichnet, daß die Membran (2) mit dem Gehäuse (1) einen Körper bildet, während die Ränder des piezoelektrischen Elements (4) fest in das Gehäuse (1) eingebracht sind, derart, daß das Gehäuse, das eine akkustische Brücke bildet, Vibrationen an die Gesamtheit der Anehmerteile, welche von äußeren, anderen als von dem Wasser erhaltenen Quellen stammen, überträgt, wobei die Membran (2), die sich im statischen Gleichgewicht befindet, keine Deformation an das piezoelektrische Element (4) überträgt.

## Claims

1. An apparatus for detecting and signalling the immersion of bodies in water, comprising a piezo-electric cell for detecting frequency waves less than or equal to 5 Hz and comprising, in a case (1), a sensor formed of a membrane (2) and a piezo-electric cell connected to a signal amplification and management circuit, in which the effects produced by disturbing frequencies not representative of bodies falling in water, are eliminated, characterized in that the elimination of effects produced by disturbing frequencies is carried out by damping or attenuating the frequencies higher than 5 Hz by placing, in the centre between membrane (2) and the piezo-electric element (4), an elastomer disk (11) with a Shore hardness between 20 and 25 and forming an elastomer bridge.

2. The apparatus as claimed in claim 1, characterized in that the thickness and the hardness of the elastomer forming the bridge (11), as well as the ratio of the areas of the disk (11) and of the piezo-electric element (4) form parameters for choosing the desired filtering.

3. The apparatus as claimed in claim 1 or 2, characterized in that the ratio of the areas of the disk (11) and of the piezo-electric element (4) is about 0,2.

4. The apparatus as claimed in claim 3, characterized in that said elastomer bridge (11) is formed by a disk about 8 mm in diameter and about 0,5 mm in thickness made from an elastomer having a Shore A hardness of about 20.

5. The apparatus as claimed in one of claims 1 to 4, characterized in that the membrane (2) is integral with the case (1), whereas the edges of the plate of the piezo-electric element (4) are inserted solidly in the body of the case (1) so that the case, forming an acoustic bridge, transmits to the whole of the parts of the sensor the vibrations received from the external sources other than water, the membrane being thus in static equilibrium and transmitting no deformation to the piezo-electric element.
